# EUROPEAN PATENT SPECIFICATION

(11) **EP 0 709 354 B1**
(45) Date of publication and mention of the grant of the patent: **31.03.1999**
(21) Application number: 95116900.2
(22) Date of filing: 26.10.1995
(51) Int. Cl.: C04B 35/66

(54) **Non-slumping, pumpable castable and method of applying the same**
Nichtabrutschende pumpbare Gussmasse und Verfahren zu deren Auftragung
Matériau coulable, pompable, sans affaissement et son procédé d'application

(30) Priority: 28.10.1994 US 330759
(43) Date of publication of application: 01.05.1996
(73) Proprietor: Harbison-Walker Refractories Company, Dallas, Texas 75201 (US)
(72) Inventor: Langenohl, Mark C., Pittsburgh, Pennsylvania 15236 (US); Hughes, Gustav O., Wilkensburg, Pennsylvania 15221 (US)
(74) Representative: Wagner, Karl H., Dipl.-Ing.

(56) References cited:
- EP-A- 0 506 421
- DE-A- 4 120 409
- GB-A- 2 165 834
- US-A- 4 904 503
- Book no. , 1953, 'THE VAN NOSTRAND CHEMIST'S DICTIONARY', J. M. HONIG ET AL. D.VAN NOSTRAND CO, INC., TORONTO, NEW YORK, LONDON
- Book no. , 1995, 'ENGINEERED MATERIALS HANDBOOK', M.M. GAUTHIER ASM INTERNATIONAL, U.S.A

## Description

### BACKGROUND OF THE INVENTION

The present invention relates to novel non-slumping, pumpable castables containing calcium-aluminate cement, and to the method of applying the same without the utilization of forms.

The use of wet gunning and shotcreting systems are old and well-known procedures. For example, shotcreting of Portland cement based concretes comprises forming a mix containing sand, gravel, and a Portland cement and tempering with water to a pumpable consistency. This concrete then passes through a swing valve concrete pump and is conducted to a nozzle where a cement set accelerator is added. High air pressure is injected at the nozzle to convey material into place where it stiffens rapidly enough so as not to slump off the wall or similar surface to which it is applied. This stiffening reaction is a result of the chemical accelerator reacting with Portland cement to rapidly begin a setting action and increase the viscosity of such concrete to prevent slumping. Approximately 3 to 6 wt. % accelerator, for each 100 wt. % of dry mix, is required to reach the desired stiffness.

However, while conventional concretes are suitable for many uses in refractory concretes, Portland cements are unsuitable as a binder, because they cannot withstand the high temperatures and corrosive environments to which refractory materials are exposed. Thus, a large majority of refractory concretes, also known as refractory castables, contain calcium-aluminate cement rather than Portland cements. Calcium-aluminate cements have greater refractoriness, and superior resistance to the environments common to high temperature refractory applications. Such high temperature refractory applications can range from boiler ash hoppers to steel ladles.

Calcium-aluminate cements have very different hydration reactions compared to Portland cement, so that additives used, for example, in the shotcreting of Portland cement concrete do not work well in refractory castables containing calcium-aluminate cement. As a consequence, at the present time there are no commercially available refractory shotcrete compositions. Moreover, while calcium-aluminate cement is vastly superior to Portland cement in its ability to withstand high temperatures and corrosive environments, it is still inferior to typical refractory aggregates, such as high purity alumina, andalusite, calcined alumina-silica or amorphous silica. The calcium-aluminate cement binder, therefore, remains the limiting factor in the performance of refractory castables.

By virtue of this fact, refractory companies have developed castable systems that use very low amounts of calcium-aluminate cement. This is possible by using chemicals that reduce the amount of water needed to bring the castable to a consistency at which it can be installed. The use of sub-micron particles as flow aids, and the careful control of the particle size distribution reduces the amount of water needed to achieve suitable pumpable consistency and increases grain-to-grain contact to keep strengths high. These low moisture castables have found use in a variety of applications in recent years where previously only pressed brick could be utilized. Such applications vary from steel ladles to aluminum melting furnaces. The savings realized by the use of casting compared to the laying and mortaring of brick are quite high in terms of labor costs and time. However, some cost savings are offset, because forms are needed to place these castables into a suitable lining and preparation, installation, and eventual removal of such forms is in itself a costly and time-consuming procedure.

In an effort to overcome these problems, refractory gunite materials have often been utilized. These are placed into position by pneumatically conveying the dry material through a hose to a nozzle where water is added. This method, however, gives inferior properties compared to casting and has the added disadvantage of producing rebounds and a significant amount of dust. Rebounds consist of the material that does not stick to the target wall or roof and bounces onto the floor. Continual efforts to reduce dust and to eliminate rebounds still have not achieved suitable results, particularly in terms of the physical properties developed.

Prior to this invention, no satisfactory procedure or composition has yet been found to be able to pneumatically install a pumpable, low moisture, non-slumping calcium-aluminate cement-containing castable.

Further information relating to the prior art can be found in the following documents:

GB-A-2 165 834 discloses a two-part gunning refractory composition which, overall, comprises 100 parts by weight of refractory raw materials consisting of 84 to 98% by weight of refractory aggregate composed of a coarse/fine grain portion and a fine powder portion, 2 to 12% by weight of a superfine refractory powder having a maximum particle size of 10 µm and 0 to 4% by weight of aluminous cement; 0.05 to 0.05 parts by weight of a hardening accelerator; 0.01 to 0.5 parts by weight of a deflocculant; and 4 to 10 parts by weight of water, colloidal silica, or a mixture thereof; in which one part (part A) comprises the said coarse/fine grain portion and the hardening accelerator, in which the other part (part B) is a slurry comprising the said fine powder portion, the superfine powder, the deflocculant and the water and/or colloidal silica, and in which either or both parts contain the aluminous cement, if present.

EP-A-0 506 421 discloses a method of dry shotcreting in which a dry cementitious composition is combined with a mixture of water and silica fume at a spray nozzle. A silica fume composition is added to the water to form a slurry of silica fume and water, and a mixture of curing accelerator and water is added to the slurry of silica fume and water. The resulting slurry and the dry composition are combined at the spray nozzle.

DE-A-41 20 409 discloses a method for applying a fast hardening spray material, wherein a cement-containing main composition is transported in a main conduit and is sprayed via a nozzle and wherein a watery solution of (meth)acrylat as a hardening accelerating agent in the main composition is transported with a linear velocity of 0.5 to 50 m/s through at least two supplementary conduits that are connected with the main conduit within 1 meter behind the nozzle tip such that the extended axes of the supplementary conduits cross one another within the main conduit, and whereby the at least two additional conduits form an angle of 30° to 90° relative to the transportation direction of the main composition, whence the main composition and the hardening accelerating agent are carried out of the nozzle.

### SUMMARY OF THE INVENTION

The present invention overcomes the problems of the prior art and provides a low calcium-aluminate cement-containing castable which is non-slumping and which can be applied without forms, in which all of the solid components can be supplied to the installer as a single mixture. It eliminates the problems of rebounding and dust, while at the same time has the necessary strength and corrosion resistance to withstand the harsh environments present in refractory-lined vessels such as steel ladles, and the like.

Briefly, the present invention comprises a low moisture castable consisting of a tempered pumpable mixture containing all of the castable solids and consisting essentially of a refractory aggregate, calcium-aluminate cement, a flow aid, and a deflocculating agent to which water is added in an amount sufficient to achieve a pumpable consistency, and a flocculating agent is also added to this mixture at the time of installation in an amount sufficient to avoid slumping when in place.

The invention also comprises the method of applying such refractory castable as is hereinafter more fully described.

### DETAILED DESCRIPTION

The present low moisture, low cement castable has all of the essential dry materials as a first component, which is tempered. That is to say, it consists essentially of a refractory aggregate, a calcium- aluminate cement, a flow aid, a deflocculating agent, and water in an amount sufficient to achieve the necessary pumpable consistency.

The refractory aggregate utilized can be any suitable for linings for metallurgical and other vessels, such as calcined fireclay, crude and calcined kyanite, crude and calcined andalusite, calcined bauxite and bauxitic kaolins, sintered alumina, fused alumina, fused bauxites, silicon carbide, zircon, zirconia, vitreous or fused silica, combinations thereof, and other like refractory aggregates. Bulk density, of course, will vary, depending mainly on the density of the aggregate(s) used in the composition.

Combinations of bauxite and calcined alumina-silica grains would give the most economical benefits for most applications. Other refractory aggregates or ingredients that may be used include magnesia, magnesia-alumina spinel, chrome ore, and chromic oxide.

As used herein, the term "low moisture, low cement castable" means a castable containing a hydraulic setting cement, such as a calcium-aluminate cement, in which the grind is adjusted and specific additives are used to obtain the least water requirement to permit placement. Typically, the total CaO content of the castable ranges from about 1 to 2.5%. It is important to limit the amount of calcium-aluminate cements, preferably to an amount no higher than about 20%. Any of the calcium-aluminate cements commonly used in refractory compositions can be utilized for this purpose. However, it is preferred to use high purity calcium aluminate cements which contain virtually only calcium aluminate phases and alumina without any rheology additives, such as dispersants. These are usually commercially available as 70% alumina and 30% calcia cements with Alcoa's CA-14 and Lafarge's SECAR 71 being examples, as well as 80% alumina and 20% calcia cements, such as Allied's CA-25, or blends of both types. It is understood that conventional high cement castables (20 to 30% cement) cannot be spraycreted with acceptable properties using the system outlined in this patent.

As to the flow aids, any conventional materials used with pulverulent refractory mixes can be used, such as microsilica, 1 to 3 micron alumina, or mixtures thereof. With respect to the deflocculating agents, these are also commonly referred to as "wetting" agents and can include phosphates such as sodium tripolyphosphate.

Ball clay can be added for its ability to function as a plasticizer and it is often desired to utilize both the conventional deflocculating agents, such as one of the phosphates, together with a plastic clay such as ball clay. Plasticizers such as bentonites and known organic plasticizers can also be used, usually in lesser amounts than the ball clay.

The said first component is essentially a low cement, low moisture castable composition that can be readily pumped at a lower water level than that of conventional high cement castables. The castable of the instant invention is easily pumped at 6.5 to 7.5% water.

As to the amount of water used, it is added in the lowest amount sufficient to achieve a pumpable consistency upon mechanical mixing suitable for use with swing valve pumps and the associated spray nozzles utilized therewith. Such swing valve concrete pumps are conventional and well known, and are ordinarily connected through a steel pipe and/or hose to a nozzle arrangement. Injection of compressed air at the nozzle allows the pumpable mixture to be sprayed onto the surface requiring the refractory lining.

A further aspect of the instant invention is the addition, preferably through such compressed air line, of a liquid flocculating agent to the nozzle where it is admixed with the tempered composition just as it is sprayed onto the surface of the vessel. If desired, the liquid flocculating agent can be added by means of any conventional pump and a "Y" interconnect to the air line, so that the flocculating agent can be added at the proper rate directly to the refractory mixture at the nozzle.

As to the flocculating agent utilized, it is preferred to use a calcium or lanthanum chloride solution or a solution of dipotassium phosphate, with calcium chloride solutions having been found to be most effective. Other alkali chlorides, alkali silicates, and alkali phosphates, such as magnesium chloride, sodium silicate, dipotassium phosphates, and other materials which will give a similar effect can also be utilized. The purpose of this flocculating agent is to neutralize or eliminate the effect of the deflocculating or wetting agent contained in the dry mixture when making the tempered castable. It acts, in effect, to instantly increase the viscosity of the low moisture castable, making it stiff enough at its existing low water level to be sprayed onto a wall without slumping and without the need for forms. The flocculating agent reacts with all composition particles, i.e., cements, aluminas, silicas, etc. causing them to agglomerate.

The amount of flocculating agent is critical since it can adversely affect the bulk density and strength of the castable. Optimum bulk density is considered the most important physical property for a refractory castable, in that all other important properties such as strength and corrosion resistance are directly proportional to the density (or porosity) of any given castable composition. Thus, as density decreases, strength and corrosion resistance also decrease. With 60% alumina castables of the present invention, the bulk density should be at least 2082 kg/m³ (130 pcf), preferably, 2243 kg/m³ (140 pcf) or higher. The amount of flocculating agent added, as hereinafter described, must therefore be carefully controlled.

This unique composition has made the method of its application highly unusual and enabled several very large and significant advantages. First, because the mix is fully tempered at the mixer before it goes to the pump, dust at the nozzle is minimal. This is in contrast to conventional refractory guniting that is not fully tempered before it is conveyed and, therefore, creates a significant amount of dust at the nozzle. Further, swing valve pumps are very efficient for moving fully tempered material. Even a small swing valve pump can install material at a faster rate than most conventional gunite or spraying equipment used for refractories. Rates of 15 to 20 tons per hour are easily obtained through a swing valve pump using the composition of the present invention compared to only four to five tons per hour through conventional guniting apparatus. Further, rebounds with respect to the instant composition are very minor compared to guniting because, as noted, the non-slumping, castable of the instant invention is fully tempered before being pumped to the nozzle. Lastly, the physical properties of the castable herein are vastly superior to conventional guniting properties or to conventional spray mixes.

Most importantly, the instant castable can be applied without the need of forms for support before it has developed sufficient cured strength from hydration of the cementitious binder so it will not slump and, of course, this avoids the cost of installing and removing such forms.

While not required, it is possible to add steel fibers to the base mix for structural integrity and organic fibers, such as polyvinyl chloride, polyethylene, or polypropylene fibers, to avoid steam damage when the applied castable is being heated. The additives are used for their usual effect and in conventional amounts. Thus, the steel fibers may be added in amounts from about 0.05 to 7 wt. % of the base mix to help strengthen the cured castable lining and organic fibers may be added in amounts from 0.02 to 0.05 wt. %.

As to proportions, for each 100 wt. % of the untempered castable, there can be used from about 75 to 95 wt. % of the refractory aggregate, 2 to 20 wt. % of the calcium-aluminate cement, 3 to 10 wt. % of the flow aid, 0.05 to 0.5 wt. % of a deflocculating agent, and 0 to 5% of ball clay. Optimally, there should be 5 to 10 wt. % of the cement, 5 to 9 wt. % of the flow aid, 0.1 to 0.25 wt. % of the deflocculating agent, and the balance the refractory aggregate.

It is especially preferred to use no more than about 10% of the calcium-aluminate cement.

A preferred composition is one containing 83.8 wt. % of the refractory aggregate, 7-10 wt. % of the cement, 5-7 wt. % microsilica, 0-2 wt. % ball clay, and 0.2 wt. % deflocculating agent. The cement may be a single cement or a blend of cements.

With respect to the flocculating agent which is added just prior to application, for each 100 wt. % of the tempered castable, it is preferred to add from about 0.1 to 2.5 wt. % of a 25 to 70% solution of dipotassium phosphate, or a 25 to 60% solution of calcium or lanthanum chloride to achieve refractory castables having a bulk density of at least about 1922 kg/m³ (120 pcf). An addition of no more than 0.7% of the calcium chloride appears to be optimum in the systems studied to date. Higher and lower concentrations of the flocculating agent can be utilized, depending on the particulars of the dry components of the castable used, concentration of the flocculating agent, and the characteristics of the flocculating agent. The optimum concentration for any given composition can be determined by routine experimentation as shown in Example 6 below.

As will be evident to those skilled in this art, the liquid pump by which the flocculating agents is fed to the nozzle must have sufficient capacity to supply the swing valve pump at its given material output, and must be able to generate enough pressure to overcome the air pressure in the line, which is ordinarily about 3.45 to 6.89 bar (50 to 100 psi). A diaphragm-type chemical metering pump is preferred over a cam-driven piston pump commonly used for Portland cement shotcreting.

With respect to the amount of water added in order to have the satisfactory tempered mix; that is, to have an adequate pump cast consistency, the amount will vary, dependent mainly upon the particular components in the mix, the particular swing valve pump utilized, the length of pipe or hose by which it is supplied, and the air pressure. These are all readily calculable by those skilled in this art. In the examples that follow, the amount of water added to properly temper the same to obtain a proper pump cast consistency, is such that it could be run through a swing valve pump and through 7.6 to 61 m (25 to 200 feet) of a heavy duty hose or pipe, and placed on the wall utilizing 3.45 - 6.89 bar (50-100 psi) air pressure.

The invention will be further described in connection with the following examples which are set forth for purposes of illustration only and in which proportions are in wt. % unless expressly stated to the contrary.

### EXAMPLES 1 TO 3

An Allentown AP-10 swing valve piston pump and a 34.5 bar (500 psi) diaphragm chemical pump to "move" the flocculating agent solution were used. In this case, 1 wt. % of a 50% dipotassium-phosphate solution was used as the flocculating agent. A 9.91 m³/min (350 cfm) air compressor was used as the source of the air feed and air was injected into the nozzle at 5.52 bar (80 psi) pressure. Samples were tested by spraying the material into a shot box and then cutting samples on a diamond saw after curing. ASTM procedures, where applicable, were used to determine properties.

For Example 1, the tempered component has the following formulation:

| | Wt. % |
|---|---|
| Calcined 60% Alumina Grain, -6.7 mm (-3 mesh) | 76.8 |
| Calcined Alumina, -44 µm (-325 mesh) | 7 |
| Microsilica | 7 |
| Calcium-Aluminate Cement | 7 |
| Ball Clay | 2 |
| Sodium Tripolyphosphate | 0.2 |

| Plus Additions | |
|---|---|
| PVC Fibers | 0.15 |
| Water to Achieve a Pump | |
| Cast Consistency, % | 7.0 |

The application rate and test results are as follows:

| | |
|---|---|
| Pump Feed Rate (Measured): | 249 kg/min (550 lbs/min) |
| Chemical Pump Feed Rate: | 1.14 ℓ/min (0.30 Gal/min) |

| Bulk Density, kg/m³ (pcf) | |
|---|---|
| After Drying at 110°C (230°F) | 2355 (147) |

| Modulus of Rupture, bar (psi) | |
|---|---|
| After Drying at 110°C (230°F) | 107 (1550) |
| After Heating to 816°C (1500°F) | 84 (1220) |

| Cold Crushing Strength, bar (psi) | |
|---|---|
| After Drying at 110°C (230°F) | 487 (7060) |
| After Heating to 816°C (1500°F) | 381 (5530) |

| Dimensional Change From Dry Size After Heating to 1649°C (3000°F) | |
|---|---|
| % Linear | +0.6 |
| % Volume | +0.8 |

For comparison, a comparable low cement castable would have a density of about 2403 kg/m³ (150 pcf) and a dried modulus of rupture of about 110 bar (1600 psi). This mix would be classified under ASTM specifications as a 60% alumina low cement castable.

For Example 2, a similar 60% alumina castable was evaluated using 0.5 of a 32% calcium chloride solution as the flocculating agent. The castable formulation and test properties were as follows:

| | Wt. % |
|---|---|
| Calcined 60% Alumina Grain, 5.6 mm (03.5 mesh) | 77.9 |
| Calcined Alumina, -44 µm (-325 mesh) | 7 |
| Calcium Aluminate Cement | 7 |
| Ball Clay | 2 |
| Microsilica | 7 |
| Sodium Tripolyphosphate | 0.1 |

| Plus Additions: | |
|---|---|
| Organic Fibers | 0.15 |
| Water to Temper, % | 7.5 |
| Pump Feed Rate (Measured) | 145 kg/min (320 lbs/min) |
| Chemical Pump Rate (Measure) | 0.57 ℓ/min (0.15 Gal/min) |

| Bulk Density, kg/m³ (pcf) | |
|---|---|
| After Drying at 110°C (230°F) | 2259 (141) |

| Modulus of Rupture, bar (psi) | |
|---|---|
| After Drying at 110°C (230°F) | 110 (1590) |
| After Heating to 816°C (1500°F) | 93 (1350) |

| Cold Crushing Strength, bar (psi) | |
|---|---|
| After Heating to 110°C (230°F) | 738 (10,700) |
| After Heating to 816°C (1500°F) | 496 (7,190) |

| Dimensional Change from Dry Size After Heating to 1649°C (3000°F) | |
|---|---|
| % Linear | -0.3 |
| % Volume | -1.4 |

It is noteworthy that use of calcium chloride instead of dipotassium phosphate as the flocculate appeared to provide a significant increase in crushing strength. The observed density decrease was probably due to the greater water addition.

Similar properties were generated on a 70% alumina low cement castable as listed below. In this case, 0.4 wt. % of a 32% calcium chloride solution was used as the flocculating agent.

For Example 2, the castable formulation and test properties were as follows:

| | Wt. % |
|---|---|
| Calcined 70% Alumina Grain, -6.73 mm/149 µm (-3/+100 mesh) | 62.8 |
| Calcined Bauxite, BMF, -149 µm (-100 mesh) | 14 |
| Calcined Alumina, -44 µm (-325 mesh) | 7 |
| Microsilica (Submicron) | 7 |
| Calcium-Aluminate 71 Cement | 7 |
| Ball Clay | 2 |
| Sodium Tripolyphosphate | 0.2 |

| Plus Addition | |
|---|---|
| PVC Fibers | 0.15 |
| Water to Temper, % | 7.5 |
| Pump Feed Rate (Measured) | 259 kg/min (570 lbs/min) |
| Chemical Pump Rate | 0.76 ℓ/min (0.2 Gal/min) |

| Bulk Density, kg/m³ (pcf) | |
|---|---|
| After Drying at 110°C (230°F) | 2355 (147) |

| Modulus of Rupture, bar (psi) | |
|---|---|
| After Drying at 110°C (230°F) | 99 (1430) |
| After Heating to 816°C (1500°F) | 86 (1250) |

| Cold Crushing Strength, bar (psi) | |
|---|---|
| After Drying to 110°C (230°F) | 456 (6620) |
| After Heating to 816°C (1500°F) | 365 (5290) |

| Dimensional Change from Dry Size After Heating to 1649°C (3000°F) | |
|---|---|
| % Linear | +2.0 |
| % Volume | +4.6 |

### EXAMPLES 4 AND 5

The properties of the instant castables compare quite well with the properties of an existing low cement castable that is pump cast into forms (Example 4). The major advantage of the instant method compared to pump casting is that it is formless. Not having to set up and remove forms can represent hundreds of thousands of dollars in reduced down time for certain applications like catalytic crackers in a petrochemical plant. The existing method of installing material without forms is refractory guniting. As can be seen in Example 5, this type of material does not have as good properties, particularly in the maximum service temperature which is limited by the high cement needed to achieve a sticky mix and the high strengths required by these products. The material claimed in this invention also has the added advantages over the gunite material in that it creates much less dust at the nozzle, rebounds are much lower, and because the material is pumped by positive displacement, instead of pneumatically, up to 5 times as much material can be placed in a given time frame.

### EXAMPLE 4

### EXISTING 60% ALUMINA LOW CEMENT CASTABLE PUMP CAST PROPERTIES

| | |
|---|---|
| Maximum Service Temperature | 1704°C (3,100°F) |

| Bulk Density, kg/m³ (pcf) | |
|---|---|
| After Drying at 110°C (230°F) | 2403 (150) |

| Modulus of Rupture, bar (psi) | |
|---|---|
| After Drying at 110°C (230°F) | 107 (1,550) |
| After Heating to 816°C (1500°F) | 176 (2,550) |

| Crushing Strength, bar (psi) | |
|---|---|
| After Drying at 110°C (230°F) | 1136 (16,480) |
| After Heating to 816°C (1500°F) | 634 (9,200) |

| Permanent Linear Change, % | |
|---|---|
| After Heating to 816°C (1500°F) | -0.2 |
| After Heating to 1649°C (3000°F) | -1.1 |

### EXAMPLE 5

### EXISTING 60% ALUMINA GUNITE MIX GUNNED PROPERTIES

| | |
|---|---|
| Maximum Service Temperature | 1704°C (3100°F) |

| Bulk Density, kg/m³ (pcf) | |
|---|---|
| After Drying at 110°C (230°F) | 2195 (137) |

| Modulus of Rupture, bar (psi) | |
|---|---|
| After Drying at 110°C (230°F) | 92 (1,340) |
| After Heating at 816°C (1500°F) | 71 (1,030) |

| Crushing Strength, bar (psi) | |
|---|---|
| After Heating at 110°C (230°F) | 414 (6,000) |
| After Heating to 816°C (1500°F) | 345 (5,000) |

| Permanent Dimensional Change After Heating to 1482°C (2700°F) | |
|---|---|
| % Linear | -0.2 |

### EXAMPLE 6

To illustrate the criticality in the amount of flocculating agent used, a series of tests was carried out using the mix of Example 3 and adding thereto a 32% calcium chloride solution in various amounts and then measuring the bulk density of the applied castable after drying at 110°C (230°F).

| Wt. % of a 32% CaCl₂ Solution as Percentage Density of dry batch | Applied Castable Density (In kg/m³ (pcf)) |
|---|---|
| 0.41% | 2275 (142) |
| 0.48 | 2066 (129) |
| 0.65 | 1954 (122) |
| 0.67 | 2082 (130) |
| 0.68 | 2227 (139) |
| 0.75 | 2130 (133) |
| 1.14 | 1986 (124) |
| 1.21 | 1874 (117) |

It will be seen that for this composition and concentration of calcium chloride, amounts above about 1.2 wt. % of calcium chloride are not suitable since they drastically decrease the density. An amount of 0.8 wt. % or less should preferably be used.

It has been noted that dipotassium phosphate is a less effective flocculating agent and as such can be used in slightly higher percentages again, with care taken not to add an amount such as to lower the bulk density below about 1922 kg/m³ (120 pcf).

These examples demonstrate that the instant invention is a desirable method of installing low cement, low moisture castables. In fact, bench scale and spraying studies have indicated that any low moisture, low cement castable containing a strong deflocculating agent that can be tempered to a pumping consistency can be utilized in this method. This includes mixes made with fireclay grain, vitreous silica grain, and bauxite grain. It has also been shown that mixes made with lower cement, down to 3%, and higher cement, up to 15% can also be installed using this method as long as they are highly deflocculated systems.

It is also believed that spinel castables which contain a preformed spinel aggregate alone or in combination with fine magnesia and alumina which form spinel in situ can also be spraycreted. These mixes, of course, would not contain large amounts of microsilica which would decrease refractoriness, although small amounts in the range of 0.25 to 1.5% may be added to enhance the final product. It should be mentioned that microsilica-free or ultra low microsilica mixes are currently not pumpable because of their poor working time, but as the technology advances the means to pump such castables may be discovered.

While the invention has been described in connection with a preferred embodiment, it is not intended to limit the scope of the invention to the particular form set forth, but on the contrary, it is intended to cover such alternatives, modifications, and equivalents as may be included within the spirit and scope of the invention as defined by the appended claims.

It should be noted that the objects and advantages of the invention may be attained by means of any compatible combination(s) particularly pointed out in the items of the appended claims.

## Claims

1. An essentially non-slumping, high density low moisture and low cement refractory castable composition with a density of at least 1922 kg/m³ (120 pcf), consisting of a tempered, pumpable first component containing the castable solids and consisting essentially of a refractory aggregate, a calcium-aluminate cement, a flow aid, a deflocculating agent, and water, the water being present in the lowest amount sufficient to achieve a pumpable consistency of the tempered first component, and a flocculating agent as a second component added to said first component at time of installation in an amount sufficient to prevent falling or slumping of the castable composition once it has been applied.

2. The castable composition of claim 1 including a plasticizer.

3. The castable composition of claim 1, wherein the proportion of castable solids for each 100 wt. % at said first component is about 75 to 95 wt. % refractory aggregate, 2 to 20 wt. % calcium-aluminate cement, 3 to 10 wt. % flow aid, and 0.05 to 0.5 wt. % deflocculating agent.

4. The castable composition of claim 3, including up to 5 wt. % of a ball clay plasticizer.

5. The castable composition of claim 3, wherein the flow aid is a microsilica, reactive alumina, or combination thereof.

6. The castable composition of claim 4, wherein the amount of flocculating agent added, for each 100 wt. % of said first component castable solids is from about 0.1 to 2.5 wt. %.

7. The castable composition of claim 6, wherein the flocculating agent is an alkali chloride, alkali silicate, an alkali phosphate, or mixture thereof.

8. The castable composition of claim 7 wherein the calcium-aluminate cement consists essentially of about 70-80 wt. % alumina and 20-30 wt. % calcia, the flow aid is a microsilica, the deflocculating agent is sodium tripolyphosphate, the plasticizer is a ball clay, and the flocculating agent is calcium chloride, lanthanum chloride, dipotassium phosphate, sodium silicate, or mixture thereof.

9. A method of applying a low moisture, low cement refractory castable to a refractory vessel with a swing valve pump and associated spray nozzle, without the use of forms comprising preparing a tempered pumpable first component consisting essentially of a refractory aggregate, a calcium-aluminate cement, a flow aid, and a deflocculating agent and water in the lowest amounts sufficient to achieve a consistency sufficient to enable the composition to be pumped and applied through said swing valve pump and spray nozzle, and adding a flocculating agent to said composition just prior to its application through said spray nozzle in an amount sufficient to prevent falling or slumping of the castable composition once it has been applied.

10. The method of claim 9, wherein the tempered pumpable composition contains a plasticizer.

11. The method of claim 9, wherein the proportion of castable solids for each 100 wt. % at said first component is about 75 to 95 wt. % refractory aggregate, 2 to 20 wt. % calcium-aluminate cement, 3 to 10 wt. % flow aid, and 0.05 to 0.5 wt. % deflocculating agent.

12. The method of claim 11, including up to 5 wt. % of a plasticizer.

13. The method of claim 12, wherein the amount of flocculating agent added, for each 100 wt. % of said first component castable solids is from about 0.1 to 2.5 wt. %.

14. The method of claim 13, wherein the flocculating agent is an alkali chloride, alkali silicate, alkali phosphate, or mixture thereof.

15. The method of claim 14, wherein the calcium-aluminate cement consists essentially of about 70-80 wt. % alumina and 20-30 wt. % calcia, the flow aid is a microsilica, the deflocculating agent is sodium tripolyphosphate, the plasticizer is a ball clay, and the flocculating agent is calcium chloride, lanthanum chloride, sodium silicate, dipotassium phosphate, or mixture thereof.

## Patentansprüche

1. Eine im wesentlichen nicht-rutschende, eine hohe Dichte besitzende, eine geringe Feuchte und wenig Bindemittel aufweisende, feuerfeste Zusammensetzung mit einer Dichte von mindestens 1922 kg/m³ (120 pcf), bestehend aus einer getemperten, pumpbaren ersten Komponente, die die gußfähigen Feststoffe enthält und im wesentlichen aus einem feuerfesten Aggregat besteht, einem Kalziumaluminat-Zement, einem Flußmittel, einem Entflockungsmittel und Wasser, wobei das Wasser in der geringsten Menge vorhanden ist, die ausreicht, um eine pumpbare Konsistenz der getemperten ersten Komponente zu erreichen, und mit einem Flockungsmittel als einer zweiten Komponente hinzugefügt zur ersten Komponente zur Zeit der Anbringung oder des Einbaus in einer Menge ausreichend, um das Fallen oder Rutschen der gußfähigen Zusammensetzung, sobald sie aufgebracht ist, zu verhindern.

2. Gießfähige Zusammensetzung nach Anspruch 1 mit einem Weichmacher oder Plastiziermittel.

3. Gießfähige Zusammensetzung nach Anspruch 1, wobei der Anteil der gießfähigen Feststoffe für jeweils 100 Gewichtsprozent der ersten Komponente ungefähr 75 bis 95 Gewichtsprozent des feuerfesten Aggregats ist, 2 bis 20 Gewichtsprozent Kalziumaluminat-Zement, 3 bis 10 Gewichtsprozent Flußmittel, und 0.05 bis 0.5 Gewichtsprozent Entflockungsmittel.

4. Gießfähige Zusammensetzung nach Anspruch 3, mit bis zu 5 Gewichtsprozent eines Kugelton-Weichmachers.

5. Gießfähige Zusammensetzung nach Anspruch 3, wobei das Flußmittel ein Mikrosiliziumdioxyd, reaktionsfreudiges Aluminiumoxyd oder eine Kombination daraus ist.

6. Gießfähige Zusammensetzung nach Anspruch 4, wobei die Menge des zugegebenen Flockungsmittels für jede 100 Gewichtsprozent der ersten Komponente gießfähige Feststoffe sind von ungefähr 0.1 bis 2.5 Gewichtsprozent.

7. Gießfähige Zusammensetzung nach Anspruch 6, wobei das Flockungsmittel ein Alkalichlorid, Alkalisilikat, ein Alkaliphosphat oder eine Mischung daraus ist.

8. Gießfähige Zusammensetzung nach Anspruch 7, wobei der Kalziumaluminat-Zement im wesentlichen aus ungefähr 70-80 Gewichtsprozent Aluminiumoxyd, 20-30 Gewichtsprozent Kalziumoxyd besteht, wobei das Flußmittel ein Mikrosiliziumoxyd ist, das Entflockungsmittel Natiumtripolyphosphat ist, der Weichmacher Kugelton ist und das Flockungsmittel Kalziumchlorid, Lanthanchlorid, Dikaliumphosphat, Natriumsilikat oder eine Mischung daraus ist.

9. Verfahren zum Aufbringen eines wenig Feuchtigkeit, wenig Bindemittel (Zement) enthaltenden feuerfesten Betons oder Materials auf ein feuerfestes Gefäß mittels einer Schwingventilpumpe und einer zugehörigen Sprühdüse ohne die Verwendung von Formen, wobei folgendes vorgesehen ist:
Herstellen einer getemperten, pumpbarem ersten Komponente,, bestehend im wesentlichen aus einer feuerfesten Aggregation, einem Kalziumaluminat-Zement, einem Flußmittel und einem Entflockungsmittel und Wasser in den geringsten Mengen ausreichend zum Erreichen einer Konstistenz hinreichend, um das Pumpen und Aufbringen durch die erwähnte Schwingventilpumpe und Sprühdüse der Zusammensetzung zu ermöglichen, und
Zugeben eines Flockungsmittels zur Zusammensetzung unmittelbar vor ihrer Aufbringung durch die Sprühdüse in einer Menge hinreichend zur Verhinderung des Fallens oder Rutschens der gießfähigen Zusammensetzung, nachdem diese aufgebracht ist.

10. Verfahren nach Anspruch 9, wobei die getemperte pumpbare Zusammensetzung einen Weichmacher enthält.

11. Verfahren nach Anspruch 9, wobei der Anteil von gußfähigen Feststoffen für jede 100 Gewichtsprozent bei der erwähnten ersten Komponente ungefähr 75 bis 95 Gewichtsprozent einer feuerfesten Aggregation ist, 2 bis 20 Gewichtsprozent Kalziumaluminat-Zement, 3 bis 10 Gewichtsprozent Flußmittel und 0.05 bis 0.5 Gewichtsprozent Entflockungsmittel.

12. Verfahren nach Anspruch 11, wobei bis zu 5 Gewichtsprozent Weichmacher vorgesehen sind.

13. Verfahren nach Anspruch 12, wobei die Menge des hinzugefügten Flockungsmittels für jede 100 Gewichtsprozent der ersten Komponente von gußfähigen Feststoffen, von ungefähr 0.1 bis 2.5 Gewichtsprozent beträgt.

14. Verfahren nach Anspruch 13, wobei das Flockungsmittel ein Alkalichlorid, Alkalisilikat, Alkaliphosphat oder eine Mischung daraus ist.

15. Verfahren nach Anspruch 14, wobei der Kalziumaluminat-Zement im wesentlichen aus ungefähr 70-80 Gewichtsprozent Aluminiumoxyd und 20-30 Gewichtsprozent Kalziumoxyd besteht, wobei das Flußmittel ein Mikrosiliziumoxyd ist, das Entflockungsmittel Natriumtripolyphosphat ist, der Weichmacher ein Kugelton ist und wobei das Flockungsmittel Kalziumchlorid, Lanthanchlorid, Natriumsilikat, Dikaliumphosphat oder eine Mischung daraus ist.

## Revendications

1. Composé réfractaire coulable à faible teneur en ciment et à faible humidité, à haute densité, et essentiellement sans affaissement, ayant une densité d'au moins 1922 kg/m³ (120 pcf) consistant en un premier composant pompable trempé contenant les solides coulables et consistant essentiellement en un agrégat réfractaire, un ciment d'aluminate de calcium, une aide au fluage, un agent de défloculation et de l'eau, l'eau étant présente dans la quantité la plus faible suffisante pour obtenir une consistance pompable du premier composant trempé, et un agent de floculation en tant que second composant ajouté au premier composant au moment de l'installation en quantité suffisante pour empêcher un écrasement ou un affaissement du composé coulable une fois qu'il a été appliqué.

2. Composé coulable selon la revendication 1, comprenant un plastifiant.

3. Composé coulable selon la revendication 1, dans lequel la proportion de solides coulables pour 100 % en poids du premier composant est d'environ 75 à 95 % en poids d'agrégat réfractaire, 2 à 20 % de ciment d'aluminate de calcium, 3 à 10 % d'aide au fluage, et 0,05 à 0,5 % d'agent de défloculation.

4. Composé coulable selon la revendication 3, comprenant jusqu'à 5 % en poids d'un plastifiant à billes d'argile.

5. Composé coulable selon la revendication 3, dans lequel l'aide au fluage est de la microsilice, de l'alumine réactive ou une combinaison de ces matériaux.

6. Composé coulable selon la revendication 4, dans lequel la quantité d'agent de floculation ajoutée pour chaque 100 % en poids du premier composant solide coulable est d'environ 0,1 à 2,5 % en poids.

7. Composé coulable selon la revendication 6, dans lequel l'agent de floculation est un chlorure alcalin, un silicate alcalin, un phosphate alcalin ou un mélange de ces éléments.

8. Composé coulable selon la revendication 7, dans lequel le ciment d'aluminate de calcium comprend essentiellement 70 à 80 % en poids d'alumine et 20 à 30 % en poids de calcium, l'aide au fluage est de la microsilice, l'agent de défloculation est du tripolyphosphate de sodium, le plastifiant est de l'argile en billes et l'agent de floculation est du chlorure de calcium, du chlorure de lanthane, du phosphate bipotassique, du silicate de sodium ou un mélange de ces éléments.

9. Procédé d'application d'un coulable réfractaire à faible teneur en humidité et faible teneur en ciment coulable sur un vaisseau réfractaire comprenant une pompe à clapet basculant et une buse de pulvérisation associée, sans utilisation d'ébauches, comprenant les étapes consistant à préparer un premier composant pompable trempé consistant essentiellement en un agrégat réfractaire, un ciment d'aluminate de calcium, une aide au fluage et un agent de défloculation et de l'eau dans la plus faible quantité suffisante pour atteindre une consistance propre à permettre à la composé d'être pompée et appliquée à la pompe à clapet basculant et à la buse de pulvérisation, et à ajouter un agent de floculation à la composé juste avant son application par la buse de pulvérisation en quantité suffisante pour éviter l'écrasement ou l'affaissement de la composé coulable une fois qu'elle a été appliquée.

10. Procédé selon la revendication 9, dans lequel la composé pompable trempée comprend un plastifiant.

11. Procédé selon la revendication 9, dans lequel la proportion de solides coulables pour 100 % en poids du premier composant est d'environ 75 à 95 % en poids d'agrégat réfractaire, 2 à 20 % de ciment d'aluminate de calcium, 3 à 10 % d'aide au fluage, et 0,05 à 0,5 % d'agent de défloculation.

12. Procédé selon la revendication 11, comprenant jusqu'à 5 % en poids d'un plastifiant à billes d'argile.

13. Procédé selon la revendication 12, dans lequel la quantité d'agent de floculation ajoutée pour chaque 100 % en poids du premier composant solide coulable est d'environ 0,1 à 2,5 % en poids.

14. Procédé selon la revendication 13, dans lequel l'agent de floculation est un chlorure alcalin, un silicate alcalin, un phosphate alcalin ou un mélange de ces éléments.

15. Procédé selon la revendication 14, dans lequel le ciment d'aluminate de calcium comprend essentiellement 70 à 80 % en poids d'alumine et 20 à 30 % en poids de calcium, l'aide au fluage est de la microsilice, l'agent de défloculation est du tripolyphosphate de sodium, le plastifiant est de l'argile en billes et l'agent de floculation est du chlorure de calcium, du chlorure de lanthane, du phosphate bipotassique, du silicate de sodium ou un mélange de ces éléments.
